# EUROPEAN PATENT APPLICATION

(11) **EP 1 591 776 A1**
(43) Date of publication of application: **02.11.2005**
(21) Application number: 04010255.0
(22) Date of filing: 30.04.2004
(51) Int. Cl.: G01N 27/12, G01N 33/00

(54) **Gas sensor for the determination of isocyanates using metal oxide semiconductors**

(71) Applicant: Henkel KGaA, 40589 Düsseldorf (DE)
(72) Inventor: Ban, Takahiko, Kyoto (JP); Eguchi, Koichi, Kyoto-city Kyoto (JP)
(74) Representative: Gesthuysen, von Rohr & Eggert

(57) **Abstract**

Sensor for detecting and quantifying isocyanates, said sensor comprising at least one isocyanate-sensitive layer optionally applied on an at least essentially inert substrate or support, wherein said sensitive layer comprises specific metal oxides optionally doped with doping additives. Further, reference to the use of such sensor in a process for detecting and quantifying isocyanates. A plurality of such sensors may be connected to result in a high-performance sensor system for selective detection or analysis. The sensor has a high sensitivity with a rapid response rate, especially with respect to the detection or quantification of isocyanates. Calibration of the sensor is a preferable embodiment.

## Description

The present invention refers to gas-sensors, especially gas-sensors which are sensitive to isocyanates, using metal oxide semiconductors.

Especially, the present invention refers to sensors for detecting and quantifying isocyanates, to respective applications or usages of such sensors as well as to a respective process or method for detecting and quantifying isocyanates, especially in the field of air-analysis or gas-analysis. For instance, such sensors may be used for analytical and technical purposes (e.g. in order to control the charging or loading of the air with isocyanates). Such sensors may be used e.g. in the fields of chemical analysis or chemical production processes, quality control or quality assessment etc.

Furthermore, the present invention relates to sensors comprising at least one isocyanate-sensitive layer applied on an at least essentially inert non-conductive (i.e. insulating) substrate or support for detecting and/or quantifying isocyanates within the scope of quantitative measurements or analyses, respectively, especially in the field of gas-analysis, especially air-analysis. For example, such sensors may be used for analytical and technical purposes in order to control the charging or pollution of the air or other gases with isocyanates or in order to perform quality controls with respect to isocyanate-containing or isocyanate-based products (such as e.g. adhesives).

Further, the present invention refers to a sensor system comprising a plurality (i.e. at least two) of such sensors resulting especially in a high-performance sensor system for selective detection or analysis, especially of isocyanates.

Organic isocyanates are chemical compounds comprising at least one isocyanate group (-N=C=O), which is bonded to an organic rest. Polyfunctional isocyanates comprising two or more isocyanate-groups within the molecule are useful substances with respect to the synthesis of polymers. Thus, they exhibit a great technical importance.

Products resulting from isocyanates may be used on an industrial and/or technical level, e.g. as so-called PUR-resins (polyurethane-resins), PUR-paints and PUR-lacquers, PUR-elastomers, PUR-foamed material, PUR-adhesives etc. The common and most important technical isocyanates are 2,4-toluenediisocyanate (TDI), hexamethylenediisocyanate (HMDI) and 4,4'-methylenedi(phenylisocyanate) (MDI). The latter may be used e.g. as an adhesive, for instance, in the timber industry in the field of the production of particle or fiber boards.

In 1991, the global production of 2,4-toluenediisocyanate was estimated to be 1,100,000 tons and that of methylenediphenylisocyanate 1,400,000 tons, respectively.

For further details with respect to isocyanates, reference can be made to RÖMPP Chemielexikon, Vol. 3, 1997, Georg Thieme Verlag, pages 1998 to 1999, keyword "Isocyanate" [isocyanates], as well as to the references cited therein, the full contents of which are hereby incorporated by reference.

However, isocyanates are harmful to human health and exhibit an irritating effect because they are highly reactive. Especially, isocyanates are irritating to the skin and to the mucous membranes, especially the mucous membranes of the respiratory system.

Airborne diisocyanate vapors and aerosols or mists may be irritating to the mucous membranes of the eyes and upper and lower respiratory tracts. Exposures above permissible limits may cause tearing and burning of the eyes, tightness of the chest and difficult or labored breathing. Furthermore, headache, chemical bronchitis, pneumonitis and pulmonary edema may occur.

According to the review entitled "Hyperreactivity and Other Health Effects of Diisocyanates: Guidelines for Medical Personnel", Technical Bulletin of the Alliance for the Polyurethane Industry, pages 1 to 8, January 2000, the primary hazard associated with the use of diisocyanates stems from the inhalation of vapors and aerosols or mists. Depending upon the concentration of vapors in the atmosphere, especially in ambient air, diisocyanates may produce health effects, primarily with respect to the respiratory system. For example, inhalation of vapors of concentrations in excess of permissible limits may result in the development of respiratory sensitization.

Moreover, toluenediisocyanate (TDI) is listed as a potential carcinogen. The evaluation of TDI as a potential carcinogen was primarily evaluated administering high dosages of TDI to animals by oral gavage.

Numerous in-vitro mutagenicity studies have been done on methylenediphenylisocyanate (MDI) with some positive results, which may account for a certain positive mutagenic effect of MDI.

Consequently, the Occupational Safety and Health Administration (OSHA) has set a Permissible Exposure Limit (PEL) for 2,4-toluenediisocyanate (2,4-TDI vapors in air of 0.02 ppm, i.e. 0.14 mg/m³, as a ceiling limit or ceiling concentration). These terms are equivalent to Maximum Allowable Concentration (MAC; in German: Maximale Arbeitsplatz-Konzentration = MAK), which is used in certain European countries.

For methylenediphenylisocyanate (MDI) in air, OSHA has set a PEL of 0.02 ppm (0.2 mg/m³) as a ceiling limit.

For 2,4-TDI, the American Conference of Governmental Industrial Hygienists (ACGIH), a voluntary standards-setting organization, has adopted a Threshold Limit Value (TLV) of 0.005 ppm (0.036 mg/m³) as an 8-hour Time Weighted Average (TWA) as the concentration to which it is believed nearly all workers may be repeatedly exposed to for 8 hours a day, 40 hours a week, without adverse effect. Said organizations have also adopted a 15-minute Short-Term Exposure Limit (STEL) for TDI of 0.02 ppm (0.14 mg/m³). For MDI, the ACGIH has established a TLV of 0.005 ppm (0.051 mg/m³) as an 8-hour TWA.

Thus, with respect to the handling of such isocyanates, safety regulations have to be adhered to. For example, the maximum concentration in the working environment (the so-called MAK-value; "Maximale Arbeitsplatz-Konzentration", i.e. maximum allowable concentration at the working place) should not exceed 0.01 ppm.

For further information, reference can be made to the aforementioned review, the full contents of which are hereby incorporated by reference.

Thus, due to the harmful effects of isocyanates with respect to human health and due to increasing environmental and ecological awareness and stronger legal regulations, there is an increasing need for carefully monitoring, determining and analyzing concentrations of isocyanates, especially when they occur as vapors or aerosols in the atmosphere or in the ambient air, respectively, where the danger exists that these pollutants may lead to a contact to human beings exposed to such pollutants. For this purpose, correct sampling procedures and accurate equipment as well as appropriate analytical techniques should be provided in order to handle the aforementioned problems.

According to prior art, several methods have been suggested in order to detect isocyanates on a qualitative or semi-quantitative level, especially when the respective isocyanates appear in gaseous form in ambient air:

The article by *A. A. Agbabiaka et al*. entitled "Molecules of Synthesized Phthalocyanine as a Material for the Detection of 2,4-Toluene Diisocyanate (TDI)", Supra. Sci., Vol. 4, pages 185 to 190 (1997), describes the detection of 2,4-toluenediisocyanate (TDI) in concentrations of at least 35 ppb by using phthalocyanine deposited onto quartz substrates with platinum electrodes. This sensor is a so-called quartz-micro-balance (qmb)-sensor. The detection properties of such system are based on physical diffusion processes resulting in slow kinetics and poor response characteristics. Further, this sensor exhibits a very low sensitivity (about 1.02, for details see Example 1, definition of sensitivity) and a slow response rate. Due to the physical diffusion processes, also the intervals between the single measurements are prolonged because of the slow desorption processes with respect to the elimination of the isocyanates to be detected.

Besides this physical detection of the isocyanates, further developments in prior art were performed, which are generally based on a photochemical interaction of isocyanates, thereby providing a certain coloration of the respective medium being sensitive to isocyanates (so-called colorimetric methods).

For example, in CH 662 659 A5 a process for the identification of diisocyanates is described, wherein oximes of unsaturated aromatic aldehydes comprising an amino group which is disubstituted with alkyl groups are used. Thereby, the diisocyanate causes a coloration which is analyzed in order to determine the concentration of said diisocyanate. This detection system exhibits the decisive disadvantage that it provides only a semi-quantitative analysis. Furthermore, the use of such system on a technical or industrial level is not mentioned at all in this document. Finally, the process seems to be limited to the semi-quantitative analysis of TDI and HDI so that the application of said process is technically not very relevant.

GB 1 163 647 describes a colorimetric test paper impregnated with a compound, which exhibits a photochemical reactivity with respect to diisocyanates present in the air. Thereby, a certain coloration of the paper occurs which has to be compared with prepared standards. Thus, this testing method only provides semi-quantitative data. Another disadvantage is that only a small number of specific diisocyanates, especially the 2,4- and 2,6-isomers of tolylene diisocyanate, are detectable with this detection system.

Finally, Zellweger Analytics (Zenter, Switzerland) and Scott (Scott Instruments, USA) developed a paper-tape monitor using a colorimetric method on the basis of photochemical processes (Sure Spot®, distributed by AFC International, Inc., USA). Thereby, a reactive taper tape is placed in a holder while a pump pulls an air sample through it. The intensity of the color stain is proportional to the concentration of the diisocyanate compound. This system exhibits the disadvantage that the concentration of the diisocyanates can only be estimated on a semi-quantitative level. Another disadvantage is the use of detection media for single use only, thus resulting in high costs. Finally, this system comprises a complicated operation mode, and it is therefore not possible to directly convert a change in color of the tape to an electronic signal, which could serve for further and more precise analysis and data processing.

Therefore, an object of the present invention is to provide an efficient sensor and a respective process for detecting and quantifying isocyanates, which at least partially avoid the disadvantages related to the prior art sensors and processes.

It is a further object of the present invention to provide a sensor and a respective process for detecting and quantifying isocyanates, which allow a quantitative detection even with respect to very small amounts or concentrations of isocyanates, especially when they occur in gaseous form or as aerosols in ambient air.

Furthermore, it is another object of the present invention to provide a process which may be used for a quantitative detection of isocyanates, which may be used over long period of time without replacing any components and which is thus cost-effective and user-friendly and which may be used especially for the aforementioned purposes.

Applicant has now surprisingly found that the problems related to the prior art sensors or devices, respectively, may be overcome by using a sensor on the basis of at least one metal-oxide semiconductor, optionally doped with at least one doping additive, for detecting and/or quantifying isocyanates, especially in the field of gas- or air-analysis.

Thus, according to a **first aspect** of the present invention, the present invention relates to a sensor, especially for detecting and/or quantifying isocyanates, wherein the sensor comprises at least one layer sensitive to a chemical target substance, especially to isocyanates. This sensitive layer of the present invention may be applied on an at least essentially inert substrate or support. The sensitive layer of the sensor of the present invention may comprise at least one semiconductor metal oxide which may be selected from the group consisting of SnO₂, In₂O₃, WO₃, TiO₂, ZnO, Co₃O₄ and/or Cr₂O₃. Optionally, the aforementioned metal oxide of the sensitive layer may be doped with at least one doping additive which may be selected from the group consisting of Pt, Pd, Cs, Ag, Rh, Ru, Rb, Nb₂O₅ and/or MnO₂.

According to the present invention, the sensitive layer may comprise at least one metal oxide which may be selected from semiconductor metal oxides, especially n-type or p-type semiconductors. For instance, the metal oxide semiconductor may be selected from the group of n-type semiconductors; examples of such n-type semiconductors may be SnO₂, In₂O₃, WO₃, TiO₂ and/or ZnO. Alternatively, it may also be possible that the metal oxide is selected from p-type semiconductors, such as e.g. Co₃O₄ and/or Cr₂O₃.

According to the present invention, the metal oxide semiconductor of the sensitive layer may be doped with at least one doping additive or doping agent. For, applicant has surprisingly found that the doping of the sensitive layer with at least one doping additive may result in a significant increase and/or improvement with respect to sensitivity and/or selectivity of the sensitive layer of the sensor of the present invention.

The amount of doping additive may be in the range of from 0 % per weight to 10 % per weight, especially from 0.1 % per weight to 10 % per weight, preferably from 0.5 % per weight to 5 % per weight. The aforementioned amounts are based on the total weight of the sensitive layer. In this context, applicant has surprisingly found that a good performance with respect to sensitivity and/or selectivity of the sensitive layer of the sensor of the present invention may be achieved by using the doping additive in an amount of about 0.5 % per weight.

As delineated before, the performance of the sensor of the present invention is significantly increased when the aforementioned semiconductor metal oxides are doped with at least one of the above doping additives. Especially, the doping of the sensor of the present invention leads to an improved sensitivity and/or selectivity with respect to the isocyanates to be detected and quantified. In this context, applicant has surprisingly found that an optimum performance of the sensor of the present invention is achieved when doped metal oxides ("metal oxide/doping additive") of the type SnO₂/MnO₂, WO₃/Pu and/or In₂O₃/Rh are used as sensitive layer material, especially with respect to propylisocyanate (PI), but also with respect to other isocyanates. Furthermore, applicant has found that the metal oxide In₂O₃ doped with the doping additive Rh has the very highest sensitivity to PI, while the metal oxide WO₃ doped with the doping agent Ru has the very fastest rate with respect to response and recovery. Furthermore, applicant has found that the sensor of the present invention exhibits the highest sensitivity with respect to PI when Rh is added to In₂O₃ in an amount of 0.5% per weight.

According to the present invention, the sensitive layer of the sensor of the present invention has a thickness of at least 0.1 µm, especially at least 5 µm. The maximum thickness of the sensitive layer of the sensor of the present invention may be up to 1,000 µm, especially up to 500 µm, preferably up to 300 µm, more preferably up to 100 µm. According to a preferred embodiment of the present invention, the sensitive layer of the sensor of the present invention has a thickness in the range of from 0.1 to 500 µm, especially from 5 to 300 µm, preferably from 5 to 100 µm, the respective upper and lower limiting values being included.

According to the present invention, the sensor of the present invention further comprises at least two electrodes. Especially, the electrodes may comprise at least one noble metal, which may be preferably platinum (Pt) or gold (Au). Usually, the electrodes are fixed to the substrate or support and are also in contact with the sensitive layer.

The arrangement of the electrodes may be realized in diverse manners. For instance, the electrodes may be applied on the surface of the substrate or support before the sensitive layer is prepared. Furthermore, it is also possible that the electrodes are completely surrounded by or embedded in the sensitive layer. Usually, the arrangement of the electrodes should be performed in a way that a contact, especially an electrical contact between the electrodes and the sensitive layer is achieved in order to measure the changes of the properties of the sensitive layer induced by the interaction of isocyanates with said sensitive layer. According to the present invention, the electrodes may be applied by using the respective noble metal used as electrode material in the form of a wire and/or in the form of a paste, which may be directly applied to the substrate or support before the sensitive layer is prepared.

The electrodes may be applied to the substrate or support in a manner known per se by the skilled practitioner, for example by printing (e.g. screen-printing), sputtering or vapor-depositing, or by simply winding the electrode material around the sensor or support, respectively.

The electrodes may be shaped linearly or non-linearly. It is also possible to provide comb-shaped electrodes in order to increase the contacting surface between said electrodes and the sensitive layer resulting in an increased performance of the sensor of the present invention.

The sensor of the present invention generally comprises at least one substrate or support on which the sensitive layer is applied (The terms "support" and "substrate" are to be understood synonymously and denote any kind of support or substrate usable or appropriate in the inventive sensor.). The substrate or support on which the sensitive layer is applied may comprise at least one non-conducting (i.e. dielectric or insulating) substance. Especially, the substance used for this purpose may be alumina (Al₂O₃) and/or carbon. Preferably, the substance may be alumina (Al₂O₃).

The support should consist of a dielectric, non-conducting (i.e. insulating) substance, i.e. it should not exhibit any conductive properties. Thus, the substrate or support should be a good electrical insulator in order to avoid any influence or falsification with respect to the measurement and in order to perform a high accuracy of measurement.

The substrate or support used according to the present invention should be inert with respect to the sensitive layer as well as to the components to be detected. Especially, there should be no reaction, especially no chemical reaction, between said substrate or support with isocyanates nor with the metal oxides or the doping additives of the sensitive layer, respectively.

According to the present invention, a supported sensor may be provided (i.e. a sensitive layer applied on a support material), especially since this leads to a reduction of the amount of used sensor material (i.e. material for forming the sensitive layer), resulting in an improved economy due to decreased production costs. Furthermore, a supported sensor may exhibit a significantly enlarged active surface, thus providing an enhanced sensor activity.

Depending on the specific use of the sensor of the present invention, a certain forming or shaping of the support or sensor, respectively, may be performed, especially in order to achieve the aforementioned increase of the active surface and the diminishing of the used sensor material, respectively. In this context, the support and/or sensor, respectively, may be brought into a shape which is appropriate for the respective application; such a shaping or forming process may be performed in a manner known per se by the skilled practitioner.

For detailed information with respect to usable support or substrate materials, reference can be made to RÖMPP Chemielexikon, Vol. 6, 1999, Georg Thieme Verlag, page 4599, keyword "Träger" [support], as well as to the references cited therein, the full contents of which are hereby incorporated by reference.

In addition to the common configuration of the sensor, a heating means may be applied to the sensor or sensor system, respectively, if appropriate or necessary due to specific requirements. For example, such a heating means may be applied or attached to the sensor in order to achieve the respective temperatures that are required in order to perform the detection and quantification of said isocyanates. This improves the performance of the sensor of the present invention. The heating means may be applied or attached directly to the support, especially on the side of the support facing away from the sensitive layer, i.e. the side of the support that is opposite the side of the support carrying the sensitive layer.

The preparation of the sensor of the present invention may be carried out in a manner known per se by a skilled practitioner. For this purpose, the preparation of the sensor may be performed using a chemical precipitation step followed by a drying and finally a sintering and/or calcination step. Metal oxides optionally doped with at least one doping additive may be applied to a substrate or support in the form of a paste followed by a subsequent drying step and/or a sintering and/or calcination step.

According to a preferred embodiment of the invention, the preparation of the sensor material may be carried out by preparing in a first step an alumina plate for example by calcination and/or sintering. In a second step, the platinum electrodes may be applied in a manner described above and then, in a third step, the respective metal oxide optionally doped with at least one doping additive is applied on the alumina plate provided with the electrodes (e.g. Pt or Au electrodes), for example by using a so-called screen-printing-process in which the metal oxide (optionally doped with at least one doping additive) is mixed with an organic binder and the resulting paste is then applied on the surface of the alumina substrate or support and finally calcined and/or sintered.

The metal oxide optionally doped with at least one doping additive may be provided by preparing the respective metal oxide powders from the respective hydrolysis products or salts. For example, a metal-cation/nitrate-solution may be used to which an ammonia solution may be added; after increasing the pH-value of the solution, the resulting precipitate may be dried, then sintered and/or calcined. The addition of the doping additive may be performed by adding the respective doping additive to the metal oxide powder, e.g. by performing a solution-based method. The resulting impregnated powders may be sintered or calcined and are then ready to be used as the sensor material.

For further details and information with respect to the preparation of the sensor of the present invention, reference is made to the subsequent examples.

The sensor of the present invention is appropriate especially for detecting and/or quantifying isocyanates of all kinds. Especially, it may be used for the detection and/or quantification and/or analysis of all kinds of isocyanates. The term "isocyanates" has to be understood in a broad manner and comprises especially all kinds of isocyanates comprising at least one NCO-group, such as mono-, di- ... polyisocyanates (i.e. mono-, di- ... polyfunctional isocyanates), monomeric, dimeric, ... isocyanates as well as isocyanate adducts and derivatives of any kind. Especially, the term "isocyanates" refers to organic isocyanates of all kinds, such as e.g. aliphatic, aromatic and/or cyclic hydrocarbons comprising at least one isocyanate group, especially 2,4-toluenediisocyanate (TDI), 4,4'-methylenediphenyldiisocyanate (MDI), propylisocyanate (PI) and other technically important isocyanates commonly known as well as their derivatives, adducts, dimers, oligomers, prepolymers etc. For further details with respect to the term "isocyanates", reference can be made to the above citations, especially to the above-mentioned RÖMPP-reference.

According to a **second aspect** of the present invention, the present invention relates to a sensor system, which comprises a plurality (i.e. at least two) of the single sensors as defined above. In such sensor system (synonymously also denoted "sensor array system", "gas-sensor-array" or "gas-sensor array-system"), the single sensors of the sensor system may be connected in any geometry (e.g. in series). Furthermore, it is also possible that the single sensors of the sensor system may comprise sensitive layers that differ from one another with respect to their composition (i.e. so that they may differ in sensitivity and/or selectivity). Thereby, a higher performance, especially a higher selectivity, may be reached.

According to a preferred embodiment, a sensor system of the present invention comprises three different inventive sensors (i.e. inventive sensors with sensitive layers of different compositions), namely (i) a first sensor comprising a In₂O₃/Rh-sensitive layer, (ii) a second sensor comprising a WO₃/Ru-sensitive layer, and (iii) a third sensor comprising a SnO₂/MnO₂-sensitive layer (e.g. the three sensors may be connected in series or in any other geometry). This leads particularly to an increase in performance, especially to an increase in selectivity, particularly in the determination of propylisocyanate (PI), above all in order to discriminate isocyanates from co-existing gases or gas mixtures.

For further details with respect to the sensor system of the present invention, reference can be made to the above explanations with respect to the sensor of the present invention, which also apply to the sensor system of the present invention accordingly, as well as to the subsequent explanations with respect to the inventive use and process.

According to a **third aspect** of the present invention, the present invention refers to the inventive use of the sensor as defined above and/or that of the sensor system as defined above, respectively. The sensor and/or the sensor system may be used for detecting and/or quantifying chemical target substances, especially isocyanates. For further details with respect to the inventive use of the sensor and the inventive sensor system, respectively, reference can be made to the above explanations with respect to the inventive sensor and the inventive sensor system as well as to the subsequent explanations with respect to the inventive process, which also apply here accordingly.

According to a **fourth aspect** of the present invention, a process for detecting and/or quantifying chemical target substances, especially isocyanates, is provided. The isocyanates to be detected or to be quantified by the inventive process may preferably be in gaseous form, especially in a mixture with other gases (i.e. generally in the form of air).

The process of the present invention generally comprises several steps:
In a first step (i) at least one sensor as defined above and/or a sensor system as defined above is contacted with a sample (i.e. generally with a gaseous sample) which may contain at least one chemical target substance, especially isocyanates; thereby, an interaction, especially a physical and/or chemical interaction between the chemical target substance and the sensor or sensor system, especially the sensitive layer(s) of said sensor or sensor system, is induced, and as a consequence of this interaction, the physical, chemical and/or electrical properties of the sensor or sensor system (i.e. those of the sensitive layer) are changed or modified.
In a second step (ii), generally subsequent and/or simultaneously to step (i), the changes in physical, chemical and/or electrical properties of the sensor or sensor system or the sensitive layer(s), respectively, as induced in step (i), are detected and/or evaluated, especially measured; thereby, the amount or concentration of the chemical target substance, especially isocyanates, within said sample is determined and/or quantified.

The term "detecting" as used in the present invention has to be understood especially in a manner that the presence of at least one chemical target substance, especially isocyanates, in a respective sample or medium, especially in the atmosphere or in ambient air, is registered and correspondingly displayed or given out as a corresponding signal or as corresponding data.

In this context, the term "quantifying" especially refers to the determination of the amount or concentration of at least one chemical target substance, especially isocyanates, in a respective sample or medium, especially in the atmosphere or in ambient air, is registered and correspondingly displayed or given out as a corresponding signal or as corresponding data.

The registration and analysis is preferably performed using the inventive sensor or the inventive sensor system, respectively, and at least one assigned or related evaluation means and/or analyzing means. However, the registration and analysis may be performed, in part or totally, using the inventive sensor or inventive sensor system, respectively.

The sensitive layer(s) of the inventive sensor or sensor system, respectively, provides as a function of the detected chemical target substances, e.g. isocyanates, especially with respect to their concentration, a signal or data which may be processed by an evaluation and/or analysing means. These processed signals or data may then be displayed and/or printed and/or provided for further processing and/or for data storaging.

According to a specific embodiment of the present invention, the isocyanates to be detected and/or quantified are brought in contact with the inventive sensor or sensor system, respectively, especially in the form of an air-stream containing said isocyanates. In order to obtain accurate quantitative values with respect to the amount or concentration of isocyanates in the respective sample, a defined flow-rate, i.e. a defined volume of air per time, is brought in contact with the inventive sensor or sensor system, respectively.

Without being bound to a specific theory, it is believed that the isocyanates to be detected and quantified are brought in contact with the sensitive layer of the inventive sensor or sensor system, wherein an intercalation and/or interaction between the isocyanates, on the on hand, and the sensitive layer, on the other hand, may occur.

Especially, it is believed that the sensitive layer of the inventive sensor exhibits a catalytic activity with respect to the isocyanates to be detected and quantified; especially said isocyanates may be catalytically oxidized. Thus, the detection and/or quantification of isocyanates via the inventive sensor or sensor system, respectively, may be preferably performed in the presence of at least one oxidizing agent. Within the scope of the present invention, all appropriate oxidizing agents known per se may be used. The preferred oxidizing agent is oxygen, especially in the form of air. According to the present invention, it is preferred to perform the detection and quantification in the presence of an excess, preferably a large excess of the oxidizing agent, such as oxygen, especially in the form of air.

Without being bound to a specific theory, it is believed that the oxidation process of the isocyanates leads to a change in the number of charge-carriers, especially to a release of charge-carriers, especially electrons, which may be transferred or released to or from the sensitive layer of the inventive sensor or sensor system, thereby changing at least one of the physical and/or chemical and/or electrical properties of the sensitive layer.

The term "properties of the sensitive layer" used herein refers to any physical and/or chemical and/or electric properties of the sensitive layer, e.g. especially to the electric potential, electrochemical potential, conductance, capacity, impedance, resistance and/or current/voltage-characteristic (I/V-characteristic) thereof as well as to variables related to the aforementioned properties.

Thus, the properties of the sensitive layer may be registered or measured by using electrical applications, e.g. by applying a current or by feeding a voltage to the inventive sensor or sensor system and by using respective measuring instruments being appropriate for measuring electric properties.

According to a preferred embodiment of the present invention, the changes in the properties of the sensitive layer may be principally registered or measured amperometrically or conductometrically.

The term "amperometrically" is to be understood in a manner that the measuring of the changes in the properties, especially the electric properties of the inventive sensor or sensor system, respectively, induced by the interaction of the isocyanates to be detected and quantified with the sensitive layer is performed using a constant voltage (V = constant). Consequently, the respective changes are detected by changes in the current value (I = variable).

The term "conductometrically" is to be understood in a manner that the measurement of the aforementioned changes in the properties, especially the electric properties, of the inventive sensor or sensor system, respectively, are measured under constant current values (I = constant). Consequently, the respective changes are measured by changes in the respective values of the voltage (V = variable).

Furthermore, according to a preferred embodiment of the present invention, the changes in the properties of the sensitive layer may be registered or measured by applying to the inventive sensor or inventive sensor system either alternating current (ac) or direct current (dc) or alternating voltage or direct voltage, respectively. However, the use of an alternating current and/or an alternating voltage, respectively, is preferred in order to avoid or at least to diminish polarization effects, especially with respect to the used electrodes, thus providing a higher accuracy of the measurement. In this context, the frequency of the applied alternating current or of the applied alternating voltage may be in the range of from 1 to 1,000 kHz, especially from 10 to 500 kHz, preferably from 100 to 300 kHz.

According to a preferred embodiment of the present invention, the sensor of the present invention may be subjected to a calibration, especially prior to its use in the process of the present invention.

The calibration process may be performed under the same experimental conditions, especially humidity, temperature etc. as used for the subsequent detection and quantification of the respective isocyanates. Thereby, the calibration may be performed by contacting a reference sample with the inventive sensor or sensor system, respectively, wherein the reference sample may be air or a gaseous mixture which is preferably at least essentially free of the isocyanate to be detected and quantified. Usually, also the data acquisition as well as the data analyses is performed in a manner similar to that of the respective measurement of the isocyanate to be detected or quantified. Thus, a reference value is obtained by the calibration (so-called baseline). In order to obtain accurate values with respect to the quantitative analysis of the isocyanate amount or concentration, the value to be further analyzed is obtained by the difference between the baseline and the measured quantity with respect to the sample containing the isocyanate. Thus, the calibration step may be performed prior to the detection and quantification of said chemical target substances, especially isocyanates, especially by performing the above-mentioned steps (i) and (ii) while using a reference sample, said reference sample containing at least essentially no chemical target substance, especially no isocyanates to be detected or quantified and is more preferably air. However, the reference sample should be similar to the respective sample to be analyzed with respect to its physical properties (for example, liquid/liquid or air/air) and should furthermore comprise at least essentially the same chemical composition exceptionally with respect to the isocyanate to be detected and quantified.

In order to improve the performance of the sensor, the inventive sensor may be subjected to a temperature operation treatment (synonymously also called "operation (of) changing temperature" or simply "temperature treatment") either prior to and/or subsequently to its use in the inventive process, especially by heat-treatment (i.e. usually heating up the sensor above measuring temperatures). Carrying out this treatment before measurement promotes sensitivity. If the operation of changing temperature of the inventive sensor is carried out after measurement (i.e. after detecting and quantifying the isocyanates), the recovery rate to baseline is hastened in comparison with standard operation keeping constant temperature. Thus, the operation of changing temperature of the sensor of the present invention improves the sensor performance.

Thus, according to the present invention, the inventive sensor may be subjected to a sensitization pre-treatment prior to its use in the process of the present invention. According to a preferred embodiment of the present invention, the sensitization pre-treatment may be performed prior to the detection and quantification of the chemical target substances, especially isocyanates. Said sensitization pre-treatment may be performed by heating the inventive sensor or the inventive sensor system; respectively, especially at temperatures of at least 250 °C, especially at least 300 °C, preferably at least 350 °C, and preferably maintaining the sensor or the sensor system, respectively, at this temperature for a certain time. Then, the temperature of the inventive sensor or the inventive sensor system, respectively, may be rapidly reduced, preferably to measuring temperature. For, applicant has surprisingly found that such process of changing temperature further improves the sensitivity of the sensor. The sensitization pre-treatment may be performed in the presence of an oxidizing atmosphere containing at least one oxidizing agent (preferably oxygen). The steps of sensitization pre-treatment may be repeated several times if appropriate or necessary due to specific requirements. Without being bound to a specific theory, it is believed that said sensitization pre-treatment especially compensates and/or diminishes defect structures on the surface and/or within the sensor or sensor system (i.e. within the sensitive layer), respectively, thereby increasing the performance of the sensor or sensor system, respectively. The term "defect structure" used herein is to be understood in a broad manner e.g. this term refers to a variety of defects especially of the sensor system, for example defects and/or disorders in the atomic structure of the sensitive layer. Another example for such defect structures are chemical compounds originating from non-complete conversion process of the isocyanates to be detected and quantified, which remain on the surface of the sensor or sensor system, respectively, thereby decreasing their activity.

As described above, according to another embodiment of the present invention, the operation of changing temperature may be carried out also after the measurement procedure. If the operation of changing temperature of the inventive sensor is carried out after the measurement (i.e. after detecting and quantifying the isocyanates), the recovery rate is hastened as explained above. Without being bound to a specific theory, it is believed that said accelerated recovery may be ascribed to a recovery of the sensitive layer (e.g. by removal of remaining substances on the surface of said sensitive layer, which originate from the measurement). Hastened recovery treatment may be performed e.g. directly after the measurement process.

According to the present invention, the process of the present invention may generally be performed at temperatures within a broad temperature range. Especially, the process of the present invention may be performed at temperatures in the range of from ambient temperature (e.g. 20 to 30 °C) to 500 °C, especially from 200 °C to 500 °C, preferably 200 °C to 400 °C, more preferably from 200 °C to 300 °C.

The process of the present invention may be used for detecting and quantifying a large number of isocyanates. For further details, reference can be made to the above explanations with respect to the inventive sensor, which apply here accordingly.

The inventive process and the inventive sensor/sensor system, respectively, allow a wide range of applications, especially the detection and/or quantification of a large number of isocyanates of all kinds for various purposes. Thus, the inventive process and the inventive sensor/sensor system may be used e.g. in quality control applications with respect to isocyanate-based products (such as e.g. in the field of isocyanate-based adhesives, paints, lacquers, plastic materials etc.). In addition, the inventive process and the inventive sensor/sensor system are also appropriate to monitor or control chemical production processes which are related to the use of and/or which are accompanied by the appearance of isocyanates. Furthermore, the inventive process and the inventive sensor/sensor system may be used e.g. for control of safety in all kinds of facilities, rooms, plants, laboratories etc. where isocyanates are produced, used, applied etc. and where isocyanates may be released as pollutants to the ambient air where they may be hazardous for the environment or persons exposed thereto. Thus, the inventive process and the inventive sensor/sensor system are appropriate and useful for the control or surveillance of the isocyanate-concentration in the respective environment or ambient air, respectively. The inventive process and the inventive sensor/sensor system may be used for detecting and/or quantifying isocyanates in any form, especially in the form of gases, aerosols, vapors and the like, e.g. in admixture with other gases, such as e.g. air etc., but principally also in the form of liquids; however, the application to gaseous samples is strongly preferred. Therefore, the inventive process and the inventive sensor/sensor system offer a broad range of applications which go from the technical application in chemical plants or facilities to private households.

For further details with respect to the process of the present invention, reference can be made to the above explanations with respect to the inventive sensor and sensor system, respectively, and to the inventive use of said sensor, which also apply to the inventive process accordingly.

As delineated before, the inventive sensor and sensor system, the inventive use as well as the inventive process lead to a great number of advantages:

The inventive sensor and sensor system, respectively allow the detection and quantification of isocyanates, especially diisocyanates, in ppb-levels. Especially the inventive sensor and sensor system, respectively, on the basis of the aforementioned metal oxide semiconductors exhibit a high sensitivity with a rapid response rate.

The inventive sensor or sensor system and thus the inventive process exhibit an impressive performance especially with respect to the detection and/or quantification of isocyanate-based substances. The inventive sensor or sensor system, respectively, and the inventive process allow the detection and quantitative determination of isocyanates in very small concentrations, such as isocyanate concentrations ≤ 0.05 ppm, especially ≤ 0.02 ppm, preferably ≤ 0.01 ppm, more preferably ≤ 0.005 ppm. In other words, the inventive sensor or sensor system and the inventive process possess sensitivity in the aforementioned ranges.

The sensor and the sensor system of the present invention can be used for detecting and quantifying a large number of components containing isocyanate-groups, such as aliphatic, aromatic and cyclic hydrocarbon components comprising isocyanate-groups as well as diisocyanate-groups.

The sensor of the present invention is simple and exhibits an easy operation resulting in a significant decrease of production costs in comparison with other sensing processes and means of prior art.

Furthermore, the operation of changing temperature of the sensor of the present invention improves the sensor performance. Carrying out this operation before measurement, sensitivity is promoted. If the operation of changing temperature of the inventive sensor is carried out after the measurement (i.e. after detecting and quantifying the isocyanates), the recovery rate to baseline is hastened in comparison with standard operation keeping constant temperature.

Further embodiments, aspects, variations and advantages of the present invention will be understood by the skilled practitioner when reading the description, without him leaving the scope of the present invention.

The present invention will be illustrated by the following examples which, however, do not limit the present invention.

### Examples:

### Example 1: Sensing properties for binary systems (doped metal oxide sensitive layers)

A gas permeater (PD-1B-2, GASTEC) produced an analyte gas from the liquid source. The analyte, in liquid form, was stored in diffusion tubes, and synthetic air (Alphagas Air, Air Liquide Japan) used as carrier gas was passed over the tube in the permeater controlled at a constant temperature to generate analyte gas with an appropriate concentration.

Analyte gas concentration was adjusted by controlling the number of diffusion tubes, temperature and flow rate of carrier gas. After each measurement, the carrier gas was introduced by a given flow rate for 30 min. A fixed resistance, 100 Ω, was connected in series with the thick film sensor. A Kenwood PW18-1.8AQ was used to provide a direct current to the sensor. Synthetic air was introduced to the cell for obtaining the sensor baseline. Then, the analyte gas was passed through the cell for 5 min after switching the gas. The changes in voltage of the fixed resistance were monitored with a computer controlled Keithley 2000 multimeter. The data were collected using the computer at sampling period 5 s.

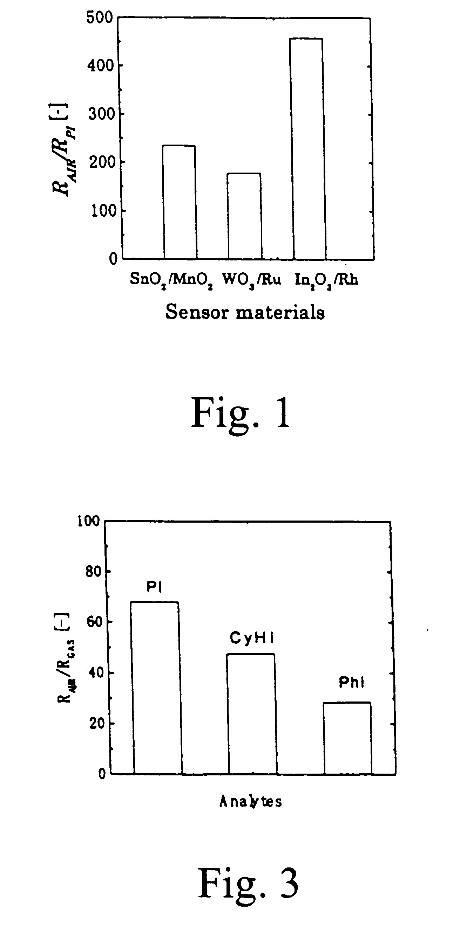

The sensors having the best performance in binary systems are SnO₂/mnO₂, WO₃/Ru and In₂O₃/Rh. Fig. 1 shows the sensitivity for the three systems to 89 ppm propylisocyanate (PI) at optimum temperature. Optimum temperature ranges from 200 °C to 500 °C in all sensors were investigated. Sensitivity is defined as R_{AIR}/R_{GAS} in which R_{AIR} and R_{GAS} are the sensor resistance in air and that in analyte gas, respectively. The sensitivity in Fig. 1 represents the values for 5 min after switching the analyte gas. The three binary systems give a high sensitivity (8-25 times compared to no-additive systems). In₂O₃/Rh has the highest sensitivity to PI, while WO₃/Ru has the fastest rate of the response and recovery.

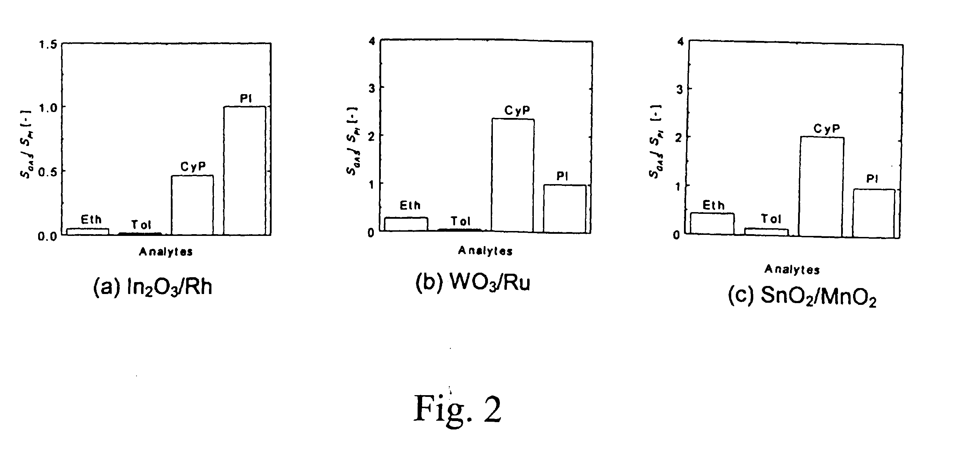

Fig. 2 demonstrates the selectivity to toluene (Tol), ethanol (Eth) and cyclopentanone (CyP) at 40 ppm for In₂O₃/Ru and SnO₂/MnO₂ in single component system. Ordinate axis represents the ratio of sensitivity of coexisting gas to that of PI. All three of the sensors demonstrated low sensitivity to toluene and ethanol, while cyclopentanone was detected with high sensitivity. However, sensing property for WO₃/Ru and SnO₂/MnO₂ is different from that for In₂O₃/Rh. Sensitivity for WO₃/Ru and SnO₂/MnO₂ to CyP is twice the value of sensitivity to PI, while sensitivity for In₂O₃/Rh to CyP is half the value of sensitivity to PI. Combination of these sensors can discriminate PI from coexisting gases in single- and multi-component systems. Gas-sensor-arrays and temperature modulation of semiconductor gas-sensors are a powerful strategy to improve selectivity [Nakata et al., *Anal. Chem.* **68** (1996) 2067; *Gramm et al*., Sensors and Actuaters B, **95** (2003) 58; Kadosaki et al., T. IEE. J., **120-E** (2000) 438].

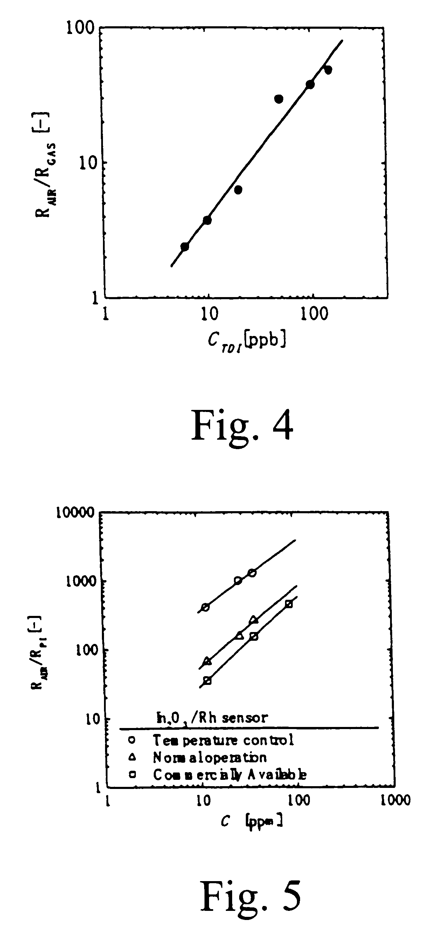

Sensitivity for In₂O₃/Rh to propyl isocyanate (PI), cyclohexyl isocyanate (CyHI) and phenyl isocyanate (PhI) at 12 ppm is shown in Fig. 3. In₂O₃/Rh shows high sensitivity to each chemical. The result indicates that In₂O₃/Rh has high sensing property to isocyanate groups regardless of functional groups.

Quantitative analysis at a ppb level of TDI was investigated. Increasing flow rate of carrier gas from F_{AIR} = 1 1/min to 10 1/min generated a few ten ppb level of TDI. Analyte gas concentration was adjusted by controlling the number of diffusion tubes. Experimental results are shown in Fig. 4. The higher concentrations were generated at F_{AIR} = 1 l/min, and the lower concentrations at F_{AIR} = 10 l/min. Sensitivity increases with an increase in concentration. Quantitative analysis of diisocyanate at a ppb level was possible. The sensitivity to 5 ppb TDI was about 2. Other isocyanates were also investigated using the same procedure. The sensitivity to 36 ppb hexamethylenediisocyanate was about 4. This sensor can detect the ppb level of the diisocyanate groups with good sensitivity.

### Example 2: Preparation of In₂O₃/Rh sensors

For enhancement of sensitivity, In₂O₃ powders were prepared from hydrolysis product. In(NO₃)₃· 3 H₂O (1.8 g, 5 mmol) was used as a starting material. Ammonia solution was added to a continuously stirred bath of indium nitrate solution (500 ml). The final pH of the solution was adjusted to 10. After filtration of precipitate, the dried precipitate was calcined at 500 °C for 3 h. The addition of 3 % per weight of Rh to the In₂O₃ powder was carried out by a solution-based method. The In₂O₃ powder was impregnated with an aqueous solution of Rh and then the solution was evaporated to dryness under stirring at 80 °C. The impregnated powders were calcined at 500 °C for 3 h.

### Example 3: Temperature change effect

The temperature change was conducted by raising temperature from 250 °C to 350 °C gradually and subsequently reducing the temperature rapidly, followed by measurement of the sensitivity at a predetermined temperature. Fig. 5 shows the effect of temperature change on sensitivity to PI gas. In Fig. 5 commercially available means that the sensor prepared from commercially available In₂O₃ powders and normal operation was done at constant temperature using a hydrolysis product. The normal operation using the hydrolysis product gives higher sensitivity than using the commercially available In₂O₃ powders. The operation changing temperatures by using the hydrolysis product further improved the sensitivity in comparison with the normal operation. Moreover, each sensor system shows good linearity between the sensitivity and concentration of the analyte gas.

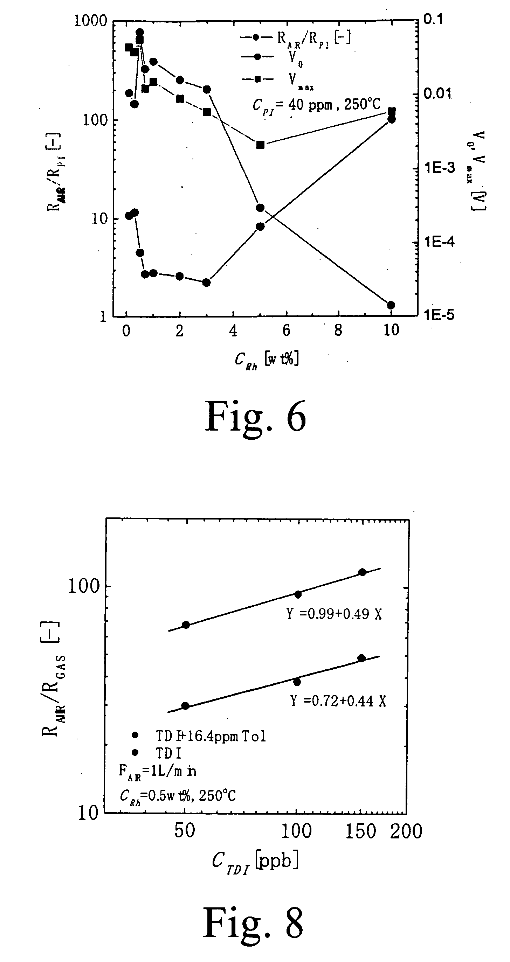

In₂O₃/Rh was prepared by adding several amounts of Rh to commercially available In₂O₃. Fig. 6 gives the effect of the Rh amount on sensitivity to 40 ppm PI, V₀ and Vₘₐₓ in Fig. 6 are the sensor voltages in air and in the analyte gas for 5 min after switching the analyte gas, respectively. The sensor of 0.5 % per weight Rh added into In₂O₃ has the highest sensitivity to PI among each sensor tested.

### Example 4: Effect of humidity on sensitivity

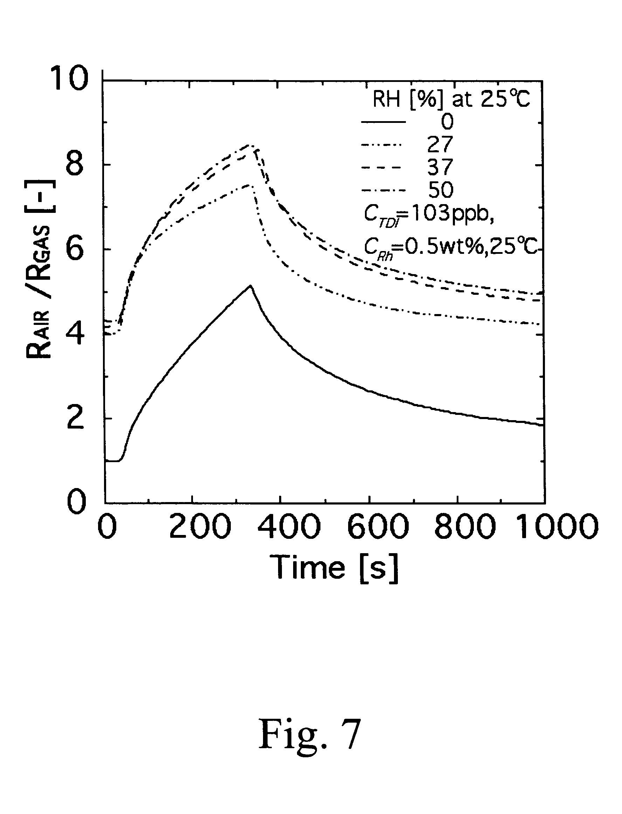

Y-branch tube was installed to mix humid gas and diisocyanate right before the measurement cell. Measurement at 0 % humidity was carried out by closing the valve on the humid gas side, followed by introducing TDI gas into the cell at F_{AIR} = 1 l/min. In a humidity experiment, humid gas and TDI gas were mixed in the Y-branch tube at the same flow rate of 0.5 l/min. Therefore, relative humidity in the measurement cell is half the value as in the humidity generator. Humidity was adjusted by changing temperature in the humidity generator at 15, 20 and 25 °C. Effect of relative humidity (RH) at 25 °C on sensitivity was investigated by using In₂O₃/Rh (0.5 % per weight) prepared from the hydrolysis product. The experimental result is shown in Fig. 7. Constant values of sensitivity at the beginning of measurements in Fig. 7 show the values of sensitivity when air with or without a given humidity flowed. Flowing humid gas increases a baseline of sensitivity. The baseline increases slightly with an increase in humidity. Each system shows a similar behavior in sensing property after switching 103 ppb TDI. No change in sensing property was observed in either system in comparison with 0 % relative humidity.

### Example 5: Effect of toluene gas on sensitivity to TDI

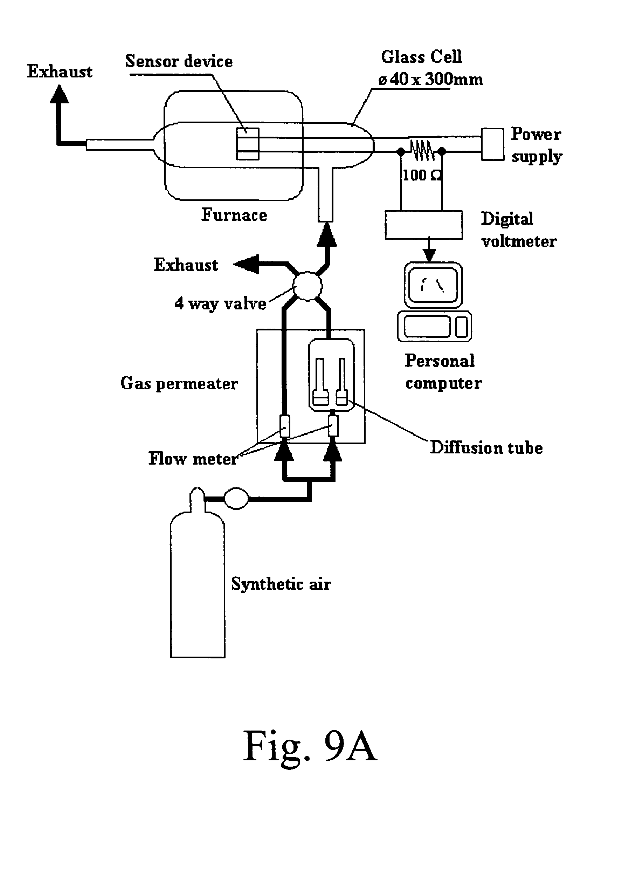

The effect to toluene gas on sensitivity to TDI for In₂O₃/Rh sensor was investigated. Synthetic air with 16.4 ppm toluene, which is Line 1, was introduced into the cell for obtaining the sensor baseline. Then TDI gas with toluene gas of the same concentration, which is Line 2, was passed through the cell. TDI concentration was adjusted by controlling the number of the diffusion tubes. Sensitivity to TDI was measured in the range of 50 to 150 ppb. Relation between the sensitivity and concentration of TDI in a ppb-range is shown in Fig. 8. The sensitivity increases linearly with TDI concentration for both systems with and without toluene gas. The slopes of the lines in both systems have a similar value, but switching the gases increased a baseline of sensitivity. This is partly because the amount of toluene evaporation in Line 1 may be different from that in Line 2. A slight change of toluene concentration greatly influences the sensitivity because toluene concentration is about 100 times as high as that of TDI. But this sensor detected TDI in range from 50 to 150 ppb under flowing toluene gas.

### Example 6: Experimental set-up

Fig. 9A shows the experimental apparatus. A gas permeater produces an analyte gas from the liquid source. The analyte, in liquid form, was stored in diffusion tubes, and synthetic air used as a carrier gas was passed over the tube in the permeater controlled at a constant temperature to generate analyte gas with an appropriate concentration.

Analyte gas concentration was adjusted by controlling the number of diffusion tubes, temperature and flow rate of carrier gas. After each measurement, the carrier gas was introduced at the given flow rate for 30 min. A fixed resistance, 100 Ω, was connected in series with the thick film sensor. A Kenwood PW18-1.8AQ was used to provide a direct current to the sensor. Synthetic air was introduced to the cell for obtaining the sensor baseline. Then the analyte gas was passed through the cell for 5 min after switching the gas. The changes in voltage of the fixed resistance were monitored with a computer controlled Keithley 2000 multimeter. The data were collected using the computer at sampling period 5 s.

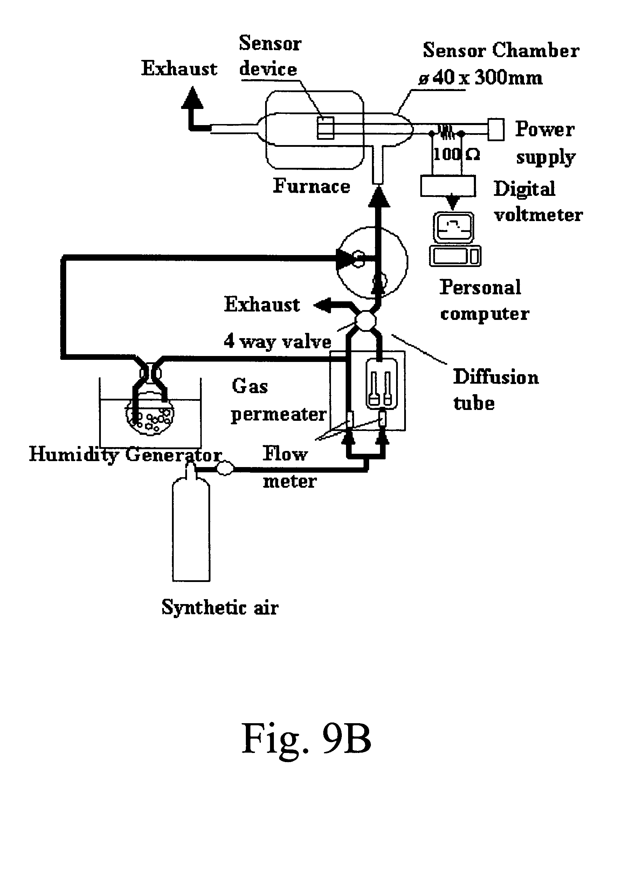

A Y-branch tube was installed to mix humid gas and diisocyanate right before the measurement cell (Fig. 9B). Measurement at 0 % humidity was carried out by closing the valve on the humid gas side, followed by introducing TDI gas into the cell at F_{AIR} = 11/min. In the humidity experiment, humid gas and TDI gas were mixed in the Y-branch tube at the same flow rate of 0.5 l/min. Therefore, relative humidity in the measurement cell is half the value as in the humidity generator. Humidity was adjusted by changing temperature in the humidity generator at 15, 20 and 25 °C. Effect of relative humidity (RH) at 25 °C on sensitivity was investigated by using In₂O₃/Rh (0.5 % per weight) prepared from a hydrolysis product. The experimental result is shown in Fig. 7. Constant values of sensitivity at the beginning of measurements in Fig. 7 show the values of sensitivity when air with or without a given humidity flowed. Flowing humid gas increases a baseline of sensitivity. The baseline increases slightly with increase in humidity. Each system shows a similar behavior in sensing property after switching 103 ppb TDI. No change in sensing property was observed in either system in comparison with 0 % relative humidity.

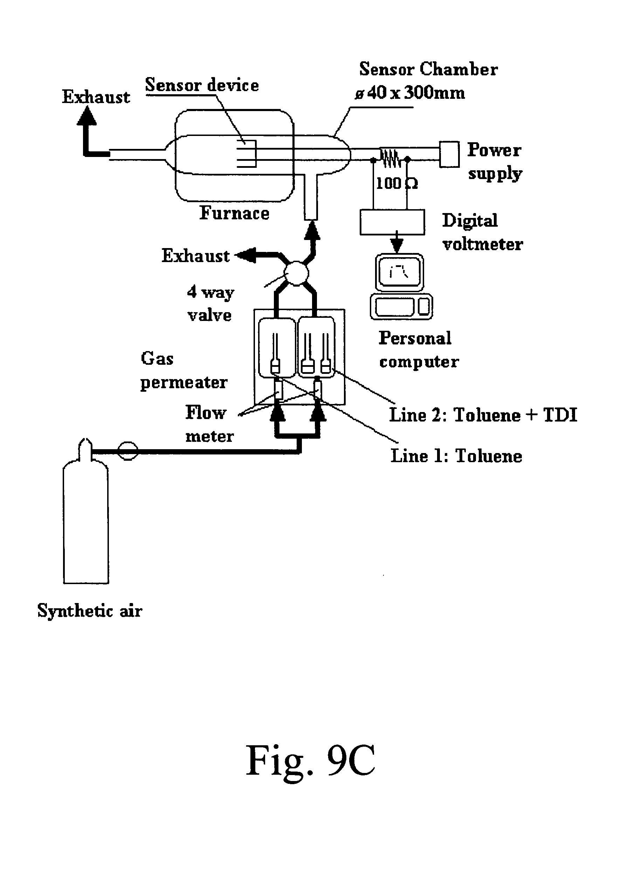

The effect of toluene gas on sensitivity to TDI for In₂O₃/Rh sensor was investigated (Fig. 9C). Synthetic air with 16.4 ppm toluene, which is Line 1, was introduced into the cell for obtaining the sensor baseline. Then TDI gas with toluene gas of the same concentration, which is Line 2, was passed through the cell. TDI concentration was adjusted by controlling the number of the diffusion tubes. Sensitivity to TDI was measured in the range of 50 to 150 ppb. Relation between the sensitivity and concentration of TDI in the ppb-range is shown in Fig. 8. The sensitivity increases linearly with TDI concentration for both systems with and without toluene gas. The slopes of the lines in both systems have a similar value, but switching the gases increased a baseline of sensitivity. This is partly because the amount of toluene evaporation in Line 1 may be different from that in Line 2. A slight change of toluene concentration greatly influences the sensitivity because toluene concentration is about 100 times as high as that of TDI. But this sensor detected TDI in a range from 50 to 150 ppb under flowing toluene gas.

### Process for preparing a sensor of the present invention:

1. Alumina plate (inert support or substrate): Calcination at 1400 °C for 10 h; then
2. Pt-electrodes (applied as Pt paste and/or wire on said alumina plate): Calcination at 930 °C for 1 h; then
3. Metal oxide (sensitive layer, optionally doped with doping additive) applied on alumina plate and Pt-electrodes: Calcination at 600 °C for 1 h.

Each metal oxide (optionally doped with at least one doping additive) was mixed with an organic binder (α-terpineol : ethyl cellulose = 15:1, the viscosity of the ethyl cellulose is 100 cp) to make a paste. The ratio of the metal oxide to the organic binder is 1:1 (in the case of brush, the ratio = 1:3). The paste was applied on the surface of an alumina substrate by screen-printing on which a pair of Pt wires (1 mm 0) as electrodes had been previously wound about 5.0 mm apart. The apparent dimension of the sensing area is about 4 x 5 mm. The sensor thickness is about 10 to 50 µm (based on SEM measurements).

## Claims

1. A sensor, especially for detecting and/or quantifying isocyanates, said sensor comprising at least one layer sensitive to chemical target substances, especially isocyanates, said sensitive layer being optionally applied on an at least essentially inert substrate or support, wherein said sensitive layer comprises at least one metal oxide selected from the group consisting of SnO₂, In₂O₃, WO₃, TiO₂, ZnO, Co₃O₄ and/or Cr₂O₃, said metal oxide being optionally doped with at least one doping additive selected from the group consisting of Pt, Pd, Cs, Ag, Rh, Ru, Rb, Nb₂O₅ and/or MnO₂.

2. The sensor according to Claim 1, wherein said sensitive layer has a thickness of from 0.1 to 500 µm, especially from 5 to 300 µm, preferably from 5 to 100 µm.

3. The sensor according to Claim 1 or 2, wherein said sensor further comprises at least two electrodes, especially wherein said electrodes comprise at least one noble metal, preferably platinum (Pt) or gold (Au), and/or especially wherein said electrodes are fixed to the substrate or support and are in contact with said sensitive layer.

4. The sensor according to any of Claims 1 to 3, wherein said substrate or support comprises at least one dielectric or non-conducting substance, especially selected from the group consisting of alumina (Al₂O₃) and carbon, preferably alumina (Al₂O₃).

5. The sensor according to any of Claims 1 to 4, wherein said sensitive layer comprises said doping additive in an amount of from 0 % per weight to 10 % per weight, especially 0.1 to 10 % per weight, preferably 0.5 to 5 % per weight, based on the total weight of said sensitive layer.

6. The sensor according to any of Claims 1 to 5, wherein said sensitive layer comprises at least one metal oxide selected from n-type semiconductors, especially selected from the group consisting of SnO₂, In₂O₃, WO₃, TiO₂ and ZnO, and/or wherein said sensitive layer comprises at least one metal oxide selected from p-type semiconductors, especially selected from the group consisting of Co₃O₄ and Cr₂O₃.

7. A sensor system, said sensor system comprising a plurality of single sensors as defined in Claims 1 to 6, especially wherein said single sensors are connected in series and/or especially wherein the single sensors comprise sensitive layers differing from one another in their composition and/or their sensitivity and/or their selectivity.

8. Use of a sensor as defined in Claims 1 to 6 and/or use of a sensor system as defined in Claim 7 for detecting and/or quantifying chemical target substances, especially isocyanates.

9. A process for detecting and/or quantifying chemical target substances, especially isocyanates, preferably in gaseous form in a mixture with other gases, said process comprising the steps of:
(i) contacting at least one sensor as defined in any of Claims 1 to 6 and/or a sensor system as defined in claim 7 with an especially gaseous sample containing at least one chemical target substance, especially isocyanates, thereby inducing an interaction, especially a physical and/or chemical interaction between said chemical target substance and said sensor or sensor system, especially said sensitive layer(s) of said sensor or sensor system, and thereby changing the physical, chemical and/or electrical properties of said sensor or said sensor system; and
(ii) detecting and/or evaluating, especially measuring, the change in physical, chemical and/or electrical properties of said sensor or said sensor system as induced in step (i) and thereby determining and/or quantifying the amount or concentration of said chemical target substances, especially isocyanates, within said sample.

10. The process according to Claim 9,
wherein said sensor or said sensor system is subjected to a calibration, especially prior to its use in said process; and/or
wherein said sensor or said sensor system is subjected to a sensitization pre-treatment prior to its use in said process; and/or
wherein said sensor or said sensor system is subjected to a temperature modulation or change subsequently to its use in said process; and/or
wherein said process is performed amperometrically or conductometrically; and/or
wherein said process is performed at temperatures in the range of from 200 to 500 °C, especially from 200 to 400 °C, preferably from 200 to 300 °C.
